# EUROPÄISCHE PATENTSCHRIFT

(11) **EP 1 919 969 B1**
(45) Veröffentlichungstag und Bekanntmachung des Hinweises auf die Patenterteilung: **24.12.2008**
(21) Anmeldenummer: 06792761.6
(22) Anmeldetag: 09.08.2006
(51) Int. Cl.: C08F 214/06, C08F 259/04, C08F 263/04

(54) **VERFAHREN ZUR HERSTELLUNG VON VINYLCHLORID-VINYLACETAT-MISCHPOLYMERISATEN IN FORM DEREN FESTHARZE**
METHOD FOR PRODUCING VINYL CHLORIDE-VINYL ACETATE COPOLYMERS IN THE FORM OF THEIR SOLID RESINS
PROCEDE POUR PREPARER DES COPOLYMERES DE CHLORURE DE VINYLE ET D'ACETATE DE VINYLE SOUS LA FORME DE LEURS RESINES SOLIDES

(30) Priorität: 01.09.2005 DE 102005041593
(43) Veröffentlichungstag der Anmeldung: 14.05.2008
(73) Patentinhaber: Wacker Chemie AG, 81737 München (DE)
(72) Erfinder: KAISER, Stephan, 84503 Altötting (DE); STROHMEIER, Claudia, 84552 Geratskirchen (DE); ZENK, Franz, 84508 Burgkirchen (DE)
(74) Vertreter: Schuderer, Michael
(86) Internationale Anmeldenummer: PCT/EP2006/065187
(87) Internationale Veröffentlichungsnummer: WO 2007/025847

(56) Entgegenhaltungen:
- DD-A1- 135 620
- GB-A- 1 113 350
- GB-A- 1 592 012

## Beschreibung

Die Erfindung betrifft ein Verfahren zur Herstellung von Vinylchlorid-Vinylacetat-Mischpolymerisaten in Form deren Festharze nach dem Suspensionspolymerisationsverfahren in wässrigem Medium, sowie die Verwendung der damit erhältlichen Festharze als Bindemittel in Lacken.

Es ist bekannt, dass Vinylchlorid-Vinylacetat-Mischpolymerisate mit einem geringen Anteil an carboxylfunktionellen Monomereinheiten als Bindemittel für Lacke geeignet sind. Bei der Herstellung derartiger Mischpolymerisate nach dem Lösungspolymerisationsverfahren werden Produkte mit hoher Reinheit und guter Löslichkeit in Lacklösemitteln wie aliphatischen Estern oder Ketonen erhalten. Nachteile des Lösungspolymerisationsverfahrens sind aber der geringe Umsatz und die großen Mengen an Lösungsmitteln, welche bei der Isolierung des Copolymers mittels Ausfällen anfallen und mit Aufwand zurückgewonnen werden müssen.

Es gab daher schon früh Ansätze, diese Nachteile durch Polymerisation in wässrigem Medium zu vermeiden. Problematisch ist dabei aber, dass die damit erhältlichen Vinylchlorid-Vinylacetat-Mischpolymerisate in organischen Lösungsmitteln schlechter löslich sind und zur Trübung der Lacklösung führen.

In der DE-AS 1105177 wird ein Verfahren beschrieben, bei dem Vinylchlorid und Vinylacetat in wässriger Suspension polymerisiert werden, wobei der Vinylacetat-Anteil vollständig vorgelegt wird und der Vinylchlorid-Anteil in einer solchen Menge vorgelegt wird, dass Vinylchlorid zu 40 bis 60 Gew.-% im Monomerengemisch vorliegt. Aus der DE-OS 2409800 ist ein Verfahren zur Polymerisation von Vinylchlorid und Vinylacetat in wässriger Suspension bekannt, bei dem alle Bestandteile des Polymerisationsansatzes, jedoch nur 50 bis 80 Gew.-% des eingesetzten Vinylchlorids vorgelegt werden, und der restliche VC-Anteil nach dem Start der Polymerisation kontinuierlich zudosiert wird. Nachteilig bei diesen Dosierverfahren ist, dass die Löslichkeit in aliphatischen Estern ungenügend ist, das heißt trübe Lösung und viele ungelöste Flocken.

Bei dem Verfahren gemäß der DE-OS 1770901 wird die Suspensionspolymerisation in Gegenwart eines in Wasser unlöslichen Lösungsmittels, welches die Monomere aber gut löst, durchgeführt. In dem Verfahren gemäß der DE-OS 2206593 wird die Suspensionspolymerisation von Vinylchlorid und Vinylacetat in Gegenwart von Celluloseether als Schutzkolloid und in Gegenwart von organischem Lösungsmittel durchgeführt. Nachteilig bei diesen Verfahren ist der Anteil an Lösungsmitteln, welche aufwändig entsorgt oder wiederverwertet werden müssen.

In der DD-PS 135620 werden Vinylchlorid und Vinylacetat in Gegenwart von Carboxylgruppen oder Hydroxygruppen enthaltenden Comonomeren in wässriger Suspension polymerisiert, wobei Polyvinylchlorid oder Polyvinylacetat als Pulver oder in Form einer wässrigen Dispersion vorgelegt werden. Die damit erhaltenen Produkte zeigen in aliphatischen Estern Trübung aufgrund des unlöslichen Polymeranteils.

Es bestand damit die Aufgabe ein Polymerisationsverfahren zur Verfügung zu stellen, mit dem in wässriger Suspension Vinylchlorid-Vinylacetat-Mischpolymerisate in Form deren Festharze zugänglich werden, welche die Lösungseigenschaften aufweisen, die nach dem Lösungspolymerisationsverfahren hergestellte Lackharze auszeichnen.

Gegenstand der Erfindung ist ein Verfahren zur Herstellung von Vinylchlorid-Vinylacetat-Mischpolymerisaten in Form deren Festharze mittels radikalisch initiierter Suspensionspolymerisation in wässrigem Medium von 70 bis 90 Gew.-% Vinylchlorid, 10 bis 30 Gew.-% Vinylacetat und gegebenenfalls weiterer damit copolymerisierbarer Comonomere, dadurch gekennzeichnet, dass 0.1 bis 5 Gew.-% eines in Ethylacetat löslichen Vinylacetat-Vinylchlorid-Mischpolymerisats vorgelegt werden, wobei die Angaben in Gew.-% jeweils auf das Gesamtgewicht der Comonomere bezogen sind.

Vorzugsweise werden 10 bis 20 Gew.-% Vinylacetat und 80 bis 90 Gew.-% Vinylchlorid copolymerisiert.

In einer bevorzugten Ausführungsform werden noch 0.1 bis 10 Gew.-% ethylenisch ungesättigte Mono- oder Dicarbonsäuren copolymerisiert, wobei die Angaben in Gew.-% für die Comonomere jeweils auf das Gesamtgewicht der Comonomere bezogen sind und sich auf 100 Gew.-% aufaddieren. Beispiele für ethylenisch ungesättigte Mono- und Dicarbonsäuren sind Acrylsäure, Methacrylsäure, Fumarsäure, Itaconsäure, Crotonsäure und Maleinsäure, welche auch in Form von Maleinsäureanhydrid copolymerisiert werden kann.

Gegebenenfalls können auch Epoxid-haltige Monomere, beispielsweise Methylglycidylmethacrylat, Methylglycidylacrylat, Allylglycidylether, Allylphenolglycidylether, Glycidylmethacrylat copolymerisiert werden. Bevorzugt wird Glycidylmethacrylat (GMA). Falls Epoxid-haltige Monomere copolymerisiert werden, dann im allgemeinen 0.01 bis 10 Gew.-%, bezogen auf das Gesamtgewicht der Comonomere.

Unter geeigneten, in Ethylacetat löslichen Vinylacetat-Vinylchlorid-Mischpolymerisaten sind solche zu verstehen, welche bei Raumtemperatur als 20 Gew.-%-ige Lösung vollständig, das heißt optisch klar löslich sind. Die Löslichkeit in Ethylacetat sollte daher unter Normalbedingungen (23/50 gemäß DIN 50014) > 20 Gew.-% betragen. Die Mischpolymerisate enthalten im allgemeinen 15 bis 50 Gew.-% Vinylacetat und 50 bis 85 Gew.-% Vinylchlorid.

Vorzugsweise werden 0.2 bis 2 Gew.-%, besonders bevorzugt 0.5 bis 1 Gew.-% in Ethylacetat lösliche Vinylacetat-Vinylchlorid-Mischpolymerisate vorgelegt, jeweils auf das Gesamtgewicht der Comonomere bezogen. Die Herstellung der in Ethylacetat löslichen Vinylacetat-Vinylchlorid-Mischpolymerisate kann nach üblichen Polymerisationsverfahren erfolgen, vorzugsweise nach dem Emulsions- oder Lösungspolymerisationsverfahren. Im allgemeinen beträgt der Vinylacetat-Anteil 15 bis 80 Gew.-%, bezogen auf das Gesamtgewicht des Vinylacetat-Vinylchlorid-Mischpolymerisats.

Die Polymerisationstemperatur im erfindungsgemäßen Verfahren beträgt im allgemeinen 20°C bis 80°C. Die Initiierung der Polymerisation kann mit den für die Suspensionspolymerisation gebräuchlichen monomerlöslichen Initiatoren erfolgen. Beispiele für monomerlösliche Initiatoren sind Dicetylperoxydicarbonat, Dicyclohexylperoxydicarbonat, Dibenzoylperoxid, Dilauroylperoxid und tert.-Butylperoxypivalat. Die genannten Initiatoren werden im allgemeinen in einer Menge von 0.01 bis 1.0 Gew.-%, bevorzugt 0.1 bis 0.5 Gew.-%, jeweils bezogen auf das Gesamtgewicht der Comonomere, eingesetzt. Bei der Suspensionspolymerisation wird in Wasser in Gegenwart von Schutzkolloiden polymerisiert. Geeignete Schutzkolloide sind beispielsweise teilverseifte und vollverseifte Polyvinylalkohole, Cellulosen und deren Carboxymethyl-, Methyl-, Hydroxyethyl-, Hydroxypropyl-Derivate. Im allgemeinen werden von 0.05 bis 5 Gew.-% Schutzkolloid eingesetzt, bezogen auf das Gesamtgewicht der Comonomere.

Zur Verbesserung der Thermostabilität der Festharze kann gegebenenfalls während oder nach der Polymerisation 0.001 bis 0.1 Gew.-%, vorzugsweise 0.005 bis 0.05 Gew.-% Ascorbinsäure und/oder Iso-Ascorbinsäure, jeweils bezogen auf das Gesamtgewicht der Comonomere, zugegeben. Bevorzugt wird Ascorbinsäure eingesetzt. Die Zugabe erfolgt vorzugsweise nach Abschluß der Monomerdosierung sowie vor, während oder nach der Restmonomerentfernung. Am meisten bevorzugt ist die Ausführungsform bei der zusätzlich zur Ascorbinsäure und/oder Iso-Ascorbinsäure noch Zitronensäure zugegeben wird. Die Menge an Zitronensäure beträgt 0.001 bis 0.1 Gew.-%, vorzugsweise 0.005 bis 0.05 Gew.-%, jeweils bezogen auf das Gesamtgewicht der Comonomere.

Zur Steuerung des Molekulargewichts können während der Polymerisation regelnde Substanzen eingesetzt werden. Falls Regler eingesetzt werden, werden diese üblicherweise in Mengen zwischen 0.02 bis 10.0 Gew.-%, bezogen auf die zu polymerisierenden Monomeren, eingesetzt und separat oder auch vorgemischt mit Reaktionskomponenten dosiert. Beispiele solcher Substanzen sind halogenierte Alkane und halogenierte Alkene wie Tetrachlorkohlenstoff, Chloroform, Methylchlorid, Trichlorethylen sowie Aldehyde wie Acetaldehyd, Propionaldehyd, Butyraldehyd und Isobutyraldehyd.

Die Monomere können insgesamt zudosiert werden oder in Anteilen vorgelegt werden und der Rest nach der Initiierung der Polymerisation zudosiert werden. Die Dosierungen können separat (räumlich und zeitlich) durchgeführt werden. Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Das Vinylchlorid-Vinylacetat-Mischpolymerisat kann aus der wässrigen Dispersion mittels üblicher Verfahren, beispielsweise durch Ausfällen, Filtrieren und anschließender Trocknung, oder mittels Dekantieren und anschließender Trocknung, in Form des Festharzes isoliert werden. Die Trocknung kann in dem Fachmann bekannter Weise beispielsweise in einem Trommeltrockner, in einem Strömungsrohr, im Fließbett, oder in einem Zyklontrockner erfolgen.

Die Vinylchlorid-Vinylacetat-Mischpolymerisate eignen sich als Bindemittel für Lacke, besonders in Heißsiegellacken, beispielweise zur Aluminiumbeschichtung. Sie zeichnen sich durch ihre hervorragende Löslichkeit in allen für Lacke üblichen Lösungsmitteln aus. Hervorzuheben ist, dass sich die Produkte nicht nur in den häufig als Lösungsmittel eingesetzten Ketonen lösen, sondern selbst bei Raumtemperatur (23°C) auch in für Vinylchlorid-Vinylacetat-Mischpolymerisaten kritischen Lösungsmitteln wie aliphatischen Estern ohne Erhitzen leicht löslich sind.

Die nachfolgenden Beispiele dienen der weiteren Erläuterung der Erfindung.

### Beispiel 1:

In einem mit Rührwerk versehenen Autoklaven wurden 50 kg vollentsalztes Wasser, 60 g Dilauroylperoxid, 0.6 kg Maleinsäure und 2 kg einer 3 Gew.-%igen, wässrigen MHPC-Lösung (Metolose 90 SH 100 der Fa. Shin Etsu) zusammen mit 150 g eines pulverförmigen, nach dem Emulsionspolymerisationsverfahren hergestellten Mischpolymerisats (84 Gew.-% Vinylchlorid, 15 Gew.-% Vinylacetat, 1 Gew.-% Itaconsäure) vorgelegt.
Dann wurde der Autoklav verschlossen und Vakuum angelegt bis der Druck 0.05 bar betrug. Der Autoklav wurde weiter beschickt mit 1.5 kg Vinylacetat und 4.5 kg Vinylchlorid und unter Rühren auf 70°C aufgeheizt, worauf die Polymerisation einsetzte. Nachdem der Druck auf 7 bar gefallen war, wurde bei konstantem Druck ein Gemisch aus 3.5 kg Vinylacetat und 20.5 kg Vinylchlorid kontinuierlich in den Autoklaven eingepumpt.
Zum Ende der Comonomerdosierung wurde der Ansatz auf Atmosphärendruck entspannt, anschließend entmonomerisiert und durch Zugabe von 20 g 10 Gew.-% NaOH neutralisiert.
Das erhaltene Copolymere wurde filtriert, gewaschen und getrocknet.
Von diesem Copolymeren wurde bei Raumtemperatur eine 20 Gew.-%-ige Lösung in Ethylacetat hergestellt. Nach 20-minütigem Rühren wurde eine klare Lösung erhalten.

### Vergleichsbeispiel 2:

Es wurde analog Beispiel 1 vorgegangen mit dem Unterschied, dass kein Mischpolymerisat vorgelegt wurde.
Von diesem Copolymeren wurde bei Raumtemperatur eine 20 Gew.-%-ige Lösung in Ethylacetat hergestellt. Nach 20-minütigem Rühren waren noch gelartige, quallige Bestandteile vorhanden (unvollständige Lösung, "Anquellen" des Polymers). Nach Erhitzen auf 50°C und weiterem Rühren von 20 Minuten wurde eine klare Lösung erhalten.

### Vergleichsbeispiel 3:

Ein nach dem Lösungsverfahren hergestelltes, kommerzielles Copolymer der Zusammensetzung 84 Gew.-% Vinylchlorid, 15 Gew.-% Vinylacetat und 1 Gew.-% Maleinsäure (UCAR® VMCH) wurde bei Raumtemperatur in Ethylacetat gelöst. Hierzu wurden 10 g des Polymerisates in 40 g Ethylacetat gegeben und 20 Minuten bei Raumtemperatur gerührt. Man erhielt eine klare Lösung.

### Beispiel 4:

In einem mit Rührwerk versehenen Autoklaven wurden 50 kg vollentsalztes Wasser, 60 g Dilauroylperoxid, 0.6 kg Maleinsäure und 2 kg einer 3 Gew.-%-igen, wässrigen MHPC-Lösung (Metolose 90 SH 100 der Fa. Shin Etsu) zusammen mit 150 g eines pulverförmigen, nach dem Emulsionspolymerisationsverfahren hergestellten Mischpolymerisats (84 Gew.-% Vinylchlorid, 15 Gew.-% Vinylacetat, 1 Gew.-% Itakonsäure) vorgelegt.
Dann wurde der Autoklav verschlossen und Vakuum angelegt bis der Druck 0.05 bar betrug. Der Autoklav wurde weiter beschickt mit 1.5 kg Vinylacetat und 4.5 kg Vinylchlorid und unter Rühren auf 70 °C aufgeheizt, worauf die Polymerisation einsetzte. Nachdem der Druck auf 7 bar gefallen war, wurde bei konstantem Druck ein Gemisch aus 3.5 kg Vinylacetat, 20.5 kg Vinylchlorid und 0.12 kg Glycidylmethacrylat kontinuierlich in den Autoklaven eingepumpt.
Zum Ende der Comonomerdosierung wurde dem Ansatz 0.015 kg Ascorbinsäure und 0.002 kg Zitronensäure zugegeben, jeweils als 10 %-ige wässrige Lösungen. Unmittelbar nach dieser Zugabe wurde der Ansatz auf Atmosphärendruck entspannt, anschließend entmonomerisiert und durch Zugabe von 20 g 10 Gew.-% NaOH neutralisiert.
Das erhaltene Copolymere wurde filtriert, gewaschen und getrocknet.
Von diesem Copolymeren wurde bei Raumtemperatur eine 20 Gew.-%-ige Lösung in Ethylacetat hergestellt. Nach 20-minütigem Rühren wurde eine klare Lösung erhalten. Zudem blieb diese Lösung auch nach einer Lagerzeit von einer Woche bei 60 °C vollkommen farblos.

### Beispiel 5:

Es wurde analog Beispiel 1 vorgegangen, mit dem Unterschied, dass als Mischpolymerisat ein nach dem Lösungsverfahren hergestelltes Copolymer der Zusammensetzung 84 Gew.-% Vinylchlorid, 15 Gew.-% Vinylacetat und 1 Gew.-% Maleinsäure eingesetzt wurde.
Von dem erhaltenen Copolymeren wurde bei Raumtemperatur eine 20 Gew.-% ige Lösung in Ethylacetat hergestellt. Nach 20-minütigem Rühren wurde eine klare Lösung erhalten.

### Beispiel 6:

Es wurde analog Beispiel 1 vorgegangen, mit dem Unterschied, dass als Mischpolymerisat ein nach dem Suspensionsverfahren hergestelltes Copolymer der Zusammensetzung 69 Gew.-% Vinylchlorid, 30 Gew.-% Vinylacetat und 1 Gew.-% Fumarsäure eingesetzt wurde.
Von dem erhaltenen Copolymeren wurde bei Raumtemperatur eine 20 Gew.-%-ige Lösung in Ethylacetat hergestellt. Nach 20-minütigem Rühren wurde eine klare Lösung erhalten.

### Vergleichsbeispiel 7:

Es wurde analog Beispiel 1 vorgegangen, mit dem Unterschied, dass als Mischpolymerisat ein nach dem Suspensionsverfahren hergestelltes Copolymer der Zusammensetzung 89 Gew.-% Vinylchlorid und 11 Gew.-% Vinylacetat, welches nicht in Ethylacetat löslich ist, eingesetzt wurde.
Von dem erhaltenen Copolymeren wurde bei Raumtemperatur eine 20 Gew.-%-ige Lösung in Ethylacetat hergestellt. Nach 20-minütigem Rühren waren noch gelartige, quallige Bestandteile vorhanden (unvollständige Lösung, "Anquellen" des Polymers), welche sich auch beim Erwärmen auf 50°C nicht vollständig lösteil.

### Vergleichsbeispiel 8:

Es wurde analog Beispiel 1 vorgegangen, mit dem Unterschied, dass statt eines Mischpolymerisates mengengleich ein Vinylacetat-Homopolymerisat (VINNAPAS ® UW 10) vorgelegt wurde. Dieses Homopolymerisat ist in Ethylacetat klar löslich.
Von dem erhaltenen Copolymeren wurde bei Raumtemperatur eine 20 Gew.-%-ige Lösung in Ethylacetat hergestellt. Nach 20-minütigem Rühren wurde eine trübe Lösung erhalten.

Der Vergleich von Beispiel 1 mit Vergleichsbeispiel 2 zeigt den Vorteil des erfindungsgemäßen Verfahrens (kein Erhitzen erforderlich).
Vergleichsbeispiel 3 (Löseversuch eines kommerziellen, nach dem Lösungsverfahren hergestellten Lackharzes) zeigt, dass die Produkte des erfindungsgemäßen Verfahrens bezüglich deren Löslichkeit mit Lösungspolymerisaten vergleichbar sind.
Beispiel 4 zeigt die Löslichkeitsverbesserung auch bei thermostabilen Lackharzen. Beispiele 5 und 6 zeigen, dass das Herstellverfahren für das vorgelegte Mischpolymerisat beliebig sein kann. Vergleichsbeispiel 7 und 8 zeigen, dass die Zusammensetzung und die Löslichkeit in Ethylacetat für das vorgelegte Mischpolymerisat wesentlich sind.

## Patentansprüche

1. Verfahren zur Herstellung von Vinylchlorid-Vinylacetat-Mischpolymerisaten in Form deren Festharze mittels radikalisch initiierter Suspensionspolymerisation in wässrigem Medium von 70 bis 90 Gew.-% Vinylchlorid, 10 bis 30 Gew.-% Vinylacetat und gegebenenfalls weiterer damit copolymerisierbarer Comonomere, **dadurch gekennzeichnet, dass** 0.1 bis 5 Gew.-% eines in Ethylacetat löslichen Vinylacetat-Vinylchlorid-Mischpolymerisats vorgelegt werden, wobei die Angaben in Gew.-% jeweils auf das Gesamtgewicht der Comonomere bezogen sind.

2. Verfahren nach Anspruch 1, **dadurch gekennzeichnet, dass** 10 bis 20 Gew.-% Vinylacetat und 80 bis 90 Gew.-% Vinylchlorid copolymerisiert werden.

3. Verfahren nach Anspruch 1 oder 2, **dadurch gekennzeichnet, dass** noch 0.1 bis 10 Gew.-% ethylenisch ungesättigte Mono- oder Dicarbonsäuren copolymerisiert werden.

4. Verfahren nach Anspruch 1 bis 3, **dadurch gekennzeichnet, dass**, noch Epoxid-haltige Monomere copolymerisiert werden.

5. Verfahren nach Anspruch 1 bis 4, **dadurch gekennzeichnet, dass** während oder nach der Polymerisation 0.001 bis 0.1 Gew.-% Ascorbinsäure und/oder Iso-Ascorbinsäure, bezogen auf das Gesamtgewicht der Comonomere, zugegeben werden, und gegebenenfalls zusätzlich zur Ascorbinsäure und/oder Iso-Ascorbinsäure noch Zitronensäure in einer Menge von 0.001 bis 0.1 Gew.-%, bezogen auf das Gesamtgewicht der Comonomere, zugegeben wird.

6. Verfahren nach Anspruch 1 bis 5, **dadurch gekennzeichnet, dass** ein in Ethylacetat löslichen Vinylacetat-Vinylchlorid-Mischpolymerisats vorgelegt wird, dessen Vinylacetat-Anteil 15 bis 80 Gew.-% beträgt.

7. Verwendung der Verfahrensprodukte nach Anspruch 1 bis 6 als Bindemittel für Lacke.

8. Verwendung gemäß Anspruch 7 in Heißsiegellacken.

## Claims

1. Process for preparing vinyl chloride-vinyl acetate copolymers in the form of their solid resins by means of free-radically initiated suspension polymerization in aqueous medium of 70% to 90% by weight of vinyl chloride, 10% to 30% by weight of vinyl acetate and, if desired, further comonomers copolymerizable therewith, **characterized in that** 0.1% to 5% by weight of a vinyl acetate-vinyl chloride copolymer soluble in ethyl acetate is introduced as an initial charge, the amounts in % by weight being based in each case on the total weight of the comonomers.

2. Process according to Claim 1, **characterized in that** 10% to 20% by weight of vinyl acetate and 80% to 90% by weight of vinyl chloride are copolymerized.

3. Process according to Claim 1 or 2, **characterized in that** additionally 0.1% to 10% by weight of ethylenically unsaturated monocarboxylic or dicarboxylic acids are copolymerized.

4. Process according to Claims 1 to 3, **characterized in that** additionally epoxide-containing monomers are copolymerized.

5. Process according to Claims 1 to 4, **characterized in that**, during or after the polymerization, 0.001% to 0.1% by weight of ascorbic acid and/or isoascorbic acid, based on the total weight of the comonomers, is added, and, if desired, in addition to the ascorbic acid and/or isoascorbic acid, citric acid as well is added in an amount of 0.001% to 0.1% by weight, based on the total weight of the comonomers.

6. Process according to Claims 1 to 5, **characterized in that** a vinyl acetate-vinyl chloride copolymer soluble in ethyl acetate is introduced as an initial charge, its vinyl acetate fraction being 15% to 80% by weight.

7. Use of the process products according to Claims 1 to 6 as binders for coating materials.

8. Use according to Claim 7 in heat-sealing lacquers.

## Revendications

1. Procédé pour la préparation de copolymères chlorure de vinyle/acétate de vinyle sous forme de leurs résines solides, par polymérisation en suspension à amorçage radicalaire en milieu aqueux de 70 à 90 % en poids de chlorure de vinyle, 10 à 30 % en poids d'acétate de vinyle et éventuellement d'autres comonomères copolymérisables avec ceux-ci, **caractérisé en ce qu'**on dispose au préalable 0,1 à 5 % en poids d'un copolymère acétate de vinyle/chlorure de vinyle soluble dans l'acétate de vinyle, les données en % en poids étant par rapport au poids total des comonomères.

2. Procédé selon la revendication 1, **caractérisé en ce que** 10 à 20 % en poids d'acétate de vinyle et 80 à 90 % en poids de chlorure de vinyle sont copolymérisés.

3. Procédé selon la revendication 1 ou 2, **caractérisé en ce qu'**encore 0,1 % à 10 % en poids d'acides mono- ou dicarboxyliques à insaturation éthylénique sont copolymérisés.

4. Procédé selon l'une quelconque des revendications 1 à 3, **caractérisé en ce qu'**encore des monomères contenant des époxydes sont copolymérisés.

5. Procédé selon l'une quelconque des revendications 1 à 4, **caractérisé en ce que** pendant ou après la polymérisation on ajoute de 0,001 à 0,1 % en poids d'acide ascorbique et/ou d'acide isoascorbique, par rapport au poids total des comonomères, et éventuellement, en plus de l'acide citrique et/ou de l'acide isoascorbique, encore de l'acide citrique en une quantité de 0,001 à 0,1 % en poids, par rapport au poids total des comonomères.

6. Procédé selon l'une quelconque des revendications 1 à 5, **caractérisé en ce qu'**on dispose au préalable un copolymère acétate de vinyle/chlorure de vinyle soluble dans l'acétate de vinyle, dont la teneur en acétate de vinyle va de 15 à 80 % en poids.

7. Utilisation des produits du procédé selon l'une quelconque des revendications 1 à 6, en tant que liant pour peintures.

8. Utilisation selon la revendication 7, dans des vernis pour thermosoudage.
